# EUROPEAN PATENT APPLICATION

(11) **EP 1 406 097 A1**
(43) Date of publication of application: **07.04.2004**
(21) Application number: 03021848.1
(22) Date of filing: 26.09.2003
(51) Int. Cl.: G02B 5/128

(54) **Retroreflecting stratiform material**

(30) Priority: 01.10.2002 IT MI20022069
(71) Applicant: IBR Industria Bergamasca Rifrangenti Srl, 24020 Scanzorosciate (Bergamo) (IT)
(72) Inventor: Bartoli, Cesare, 24060 Cenate Sopra (Bergamo) (IT)
(74) Representative: Marietti, Giuseppe

(57) **Abstract**

A stratiform material, having retro-reflecting properties, transferable on a support comprising at least a single layer of spheroidal elements, partially or completely transparent, and at least a layer of bonding resin wherein the aforesaid single layer of spheroidal elements is partially incorporated. The bonding resin is substantially colourless and substantially transparent and, preferably, comprises one or more reflecting substances amount of which is such to confer only partially reflection properties.

## Description

The present invention concerns a stratiform material, with retro-reflecting properties, of the type comprising a layer of spheroidal elements substantially transparent and at least a layer of bonding resin attached to said layer of spheroidal elements, such stratiform material being suitable to be transferred on any suitable support.

Realization of a stratiform material with retro-reflecting properties is known, usually in film shape comprising a plurality of transparent spheroidal elements, with an average diameter included between 500µm and 2000µm, partially incorporated as a single layer in a suitable bonding resin. Materials of this type, thanks also to the bonding resin, are transferable on any support, for example textile and/or plastic, in order to give to this last such retro-reflecting properties, in particular, the transparent spheroidal element, also called mycrospheres, are normally realised in glass and have a refractive index greater than or equal to 1,4 and usually smaller than or equal to 2,2. This type of mycrosphere layers, not further treated, however give only mild retro-reflecting properties.

In order to improve reflecting properties of the mycrospheres, and then improve the white light flow reflected when the retro-reflecting layer is stroke by the light from an external source, preferentially the mycrospheres are partially covered by a smooth layer of a reflecting material, for example a metallic layer, through known deposition processes. The metalized caps, normally having hemispherical extension, so become concave substantially spherical mirrors which are able, when hit by an incident light beam, to send back white light flow directed towards the source of the incident beam.

The spherical caps on which the reflecting material is settled (deposed) are disposed on the same side on the bonding resin in such a way that the whole layer of mycrospheres has homogeneous optical properties and then is able to reflect the incident light along the same direction. The further settling of the bonding resin on a support, as for example part of a cloth or portions of a road sign, allows obtaining objects provided with optimal retro-reflecting properties.
bonding resins usually adopted to settle the layer of mycrospheres on the support are usually opaque, because the reflecting properties of the metalized hemispherical caps do not permit the light transmission under them. When, as it is known, aluminium is adopted to cover the hemispherical caps, in presence of diffused light the mycrospheres are seen in grey colour.

Presently, it has been felt, above all for aesthetical, but also functional reasons, the need to obtain layers of mycrospheres which, during the day, make see different colourings from the grey one or which, alternatively permit a certain transparency in such way that adopting conveniently coloured bonding resins, such resin colours can be seen from possible observers during the day.

Solutions have been conceived which provide the interposition of a coloured layer, partially transparent, between the hemispherical cap and the reflecting material layer or which provide inside the same layer mixing of not metalized mycrospheres with metalized mycrospheres disposed on a coloured bonding resin. In both cases, a certain perception of the colour is obtained when the retro-reflecting material is submitted to diffused light.

However such solutions have been proved to be complex in realization and weak in efficacy. In fact, in both solutions colour perceived with diffused light has metallic or grey reflections, and it is also difficult, in one case, to interpose a coloured layer between mycrosphere and transparent layer and, in the other case, to obtain a sufficiently homogeneous mix of metalized mycrospheres and completely transparent mycrospheres which gives the desired transparency effect.

Also it has been proposed to modify the properties of the reflecting layer, usually metallic, deposed on the hemispherical caps of the mycrospheres and to couple such modified mycrospheres with a coloured resin. For example, ablation of the reflecting layer with a laser beam, in order to locally reduce thickness, allows to obtain mycrospheres with a just partially reflecting layer which during daytime permits perception of the colour of the resin under the mycrospheres layer.

However, also these solutions have been proved not to be completely satisfactory, both because perception of the colour of the underlying resin is highly affected by the reflecting material layer, and because usage of coloured resins, often being also expensive, does not lead to optimal results.

It is an object of the present invention to provide a stratiform material with retro-reflecting properties transferable on any support which permits, at least under diffused light, to distinctly perceive the colour or the decoration eventually present on said support and then underlying both spheroidal elements layer, and the bonding resin.

It is another aim of the present invention to provide a stratiform material transferable on a support having retro-reflecting properties which is partially transparent but which has not drawbacks of the known art.

It is a further aim of the present invention to supply a textile and/or plastic support provided with one ore more portions on which said stratiform material having retro-reflecting material has been applied.

Moreover it is another object of the present invention to provide a process for the realization of said textile and/or plastic support provided with said retro-reflecting material.

These and other objects are achieved by the retro-reflecting material claimed in the first independent claim and by successive dependent claims, by the textile and/or plastic support claimed in the claims from 14 to 16 and by the method according to any of claims from 17 to 24.

The stratiform material having retro-reflecting properties transferable on a .support, according to the present invention, comprises at least one single layer of spheroidal elements, partially or completely transparent, and at least one layer of bonding resin in which is partially incorporated said single layer of spheroidal elements. The bonding resin is substantially colourless and substantially transparent and, preferably, such spheroidal elements have absolute refractive index greater than or equal to 1,1.

Using partially or completely transparent spheroidal elements with a colourless and transparent bonding resin permits to achieve both, clearly, the desired transparency of the stratiform material in presence of diffused light and, also in case of completely transparent spheroidal elements, a certain retro-reflection property when spheroidal elements are hit by a light beam from an external source, in darkness or scarce visibility conditions.

According to a particularly advantageous aspect of the present invention, excellent retro-reflection properties are achieved by deposing a reflecting substance on a spherical cap of each spheroidal element, for example a metallic or micaceous material, having accurately calibrated thickness, in such a way that the layer of reflecting substance has an optical density included between 0,1 and 1,3.

In a preferred embodiment of the retro-reflecting material according to the present invention, spheroidal elements are glass mycrosphere which diameter is greater than or equal to 5 µm and colourless and transparent resin is chosen between acrylic, polyurethane, polyester, acryl-vinyl resins, EVA. According to a peculiar aspect of the present invention, in such resin a reflecting substance may be included, as for example mica, which amount is such to give partially reflection properties to the same resin, without consequently modifying its substantial transparency.

The textile and/or plastic support, according to the present invention, comprises one or more portions of a stratiform material with retro-reflecting properties having at least one single layer of partially or completely transparent spheroidal elements, and at least one layer of bonding resin substantially colourless and substantially transparent jointed to the aforesaid layer of spheroidal elements.

The method for the realization of a textile and/or plastic support having at least locally retro-reflecting properties, provided with one or more layers of partially or completely transparent spheroidal elements, according to the present invention, comprises phases of:
- setting up a plurality of substantially transparent spheroidal elements in order to generate a single layer of aforesaid one ore more layers of spheroidal elements;
- adding a substantially colourless and substantially transparent bonding resin on the layer of spheroidal elements;
- bonding such colourless and transparent resin to the textile and/or plastic support.

In a particular embodiment of the method according to the present invention, reflecting substances may be included in the colourless and transparent resin, as for example mica.

Some embodiments of the present invention will be hereinafter explained, only as examples, with reference to enclosed figures, wherein:
figure 1 is an enlarged schematic section view of a stratiform retro-reflecting material according to a first aspect of the present invention, applied to a portion of a decorated support;
figure 2 is an enlarged schematic section view of a stratiform retro-reflecting material according to another aspect of the present invention, applied to a portion of a support;
figure 3 is a schematic section view of a spheroidal element according to another aspect of the present invention; and
figure 4 is a block diagram which represents a method for realization of the support of figures 1 and 2.

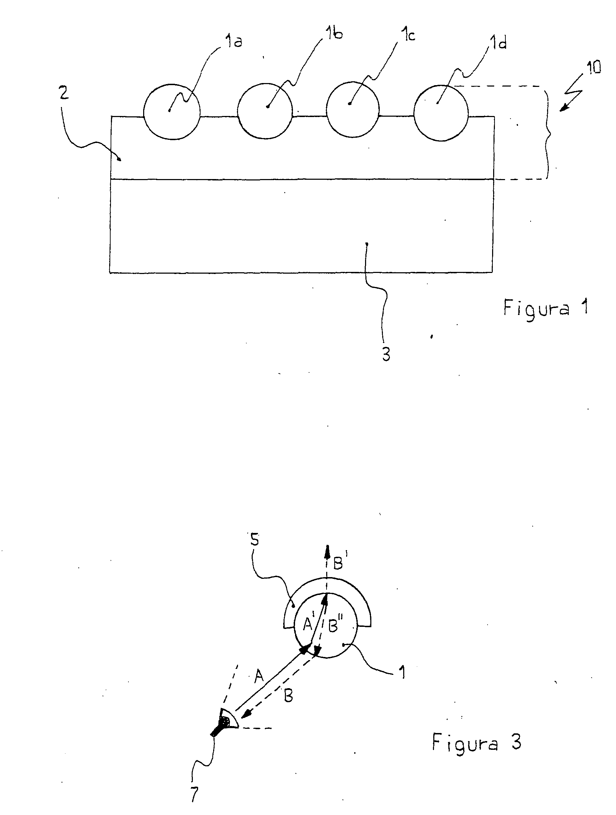

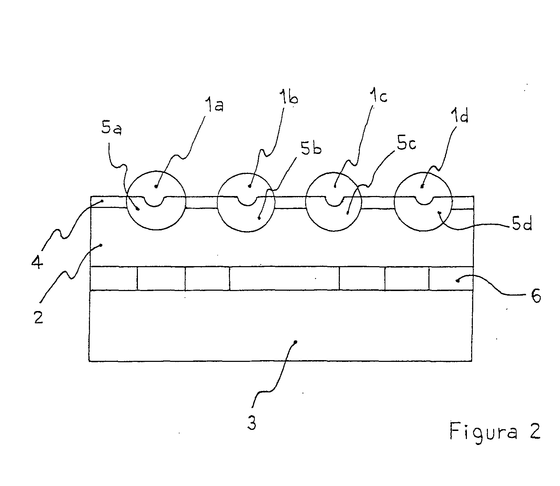

With reference to figure 1, retro-reflecting stratiform material 10, transferable on a support, according to the present invention, comprises a plurality of spheroidal elements 1a, 1b, 1c, 1d, completely or partially transparent which are set up to generate a "single" layer, that is without superimposition of spheroidal elements one over the other, partially incorporated in a layer of bonding resin 2. The bonding resin 2 is conveniently substantially colourless or substantially transparent.

Arrangement of spheroidal elements 1a-1d, or mycrospheres, also substantially transparent, to generate an homogeneous layer on the layer of colourless and transparent bonding resin permits, as said, to obtain a material which is at least partially retro-reflecting in presence of a direct light source, while is almost completely transparent in presence of a diffused light.

In a preferred embodiment of the invention, mycrospheres 1a-1d are formed by a transparent material having refractive index greater than or equal to 1,1 and preferably greater than or equal to 1,4 and less than or equal to 2,2. Mycrospheres, having average diameter normally included between 5 µm and 2000µm may be realized, according to known techniques, in a vitreous material, for example with BaO or ZnO or TiO₂, ceramic or polymeric.

According to an aspect of the present invention, the bonding resin 2 is also suitable to be applied on any support 3, obviously on the side not containing mycrospheres 1a-1d, for example textile or plastic support, which may previously, coloured and/or patterned with a decoration. Application of stratiform material 10, comprising the layer of mycrospheres 1a-1d and the colourless and transparent resin 2, permits to clearly perceive during daytime, with diffused light, the colour and/or the decoration eventually present on support 3.

Resin 2 may be chosen depending on usage of stratiform material 10, that is of support 3 on which the same material 10 is intended to be applied, and may be of different kind, as for example acrylic, polyuretanic, polyester, acrylic-vinyl or EVA.

Depending on the type of support on which material 10 is applied, resin 2 may be derived from solvent solutions, from aqueous emulsions, from monomers and pre-polymers polymerisable through monochromatic radiations at various frequencies, or may be a solid thermo-meltable resin.

In a particular embodiment of the present invention, one ore more reflecting substances are mixed to the bonding resin 2, as for example mica, amount of which is such to preserve the substantially transparency and colourless of the same resin 2, but at the same time to confer partially reflecting properties to this last.

Adoption of a bonding resin 2 which includes small quantities of reflecting substances having completely transparent mycrospheres 1a-1d pointed out good reflection properties of the retro-reflecting material 10 when hit by an external light source in dark or scarce visibility conditions and also optimal transparency properties in presence of diffused light.

In another preferential embodiment of the present invention, with reference to figures 2 and 3, each mycrosphere 1, 1a-1d comprises a superficial portion on which a reflecting substance 4 is deposed, through known technique, to generate a spherical cap 5, 5a, 5b, 5c, 5d, preferably hemispherical, having only partially reflecting properties. In particular, it is appropriate that the layer of the reflecting substance has an optical density included between 0,1 and 1,3.

In this way, spherical cap 5 permits partial transmission of light toward resin 2 and partial reflection of the incident light flow, as white light. In the case mycrosphere 1 provided with a spherical cap 5 covered with a calibrated layer of reflecting substance 4, for example metallic, is subject to a light beam A from an external source 7, this undergoes a refraction A' during passage in the mycrosphere 1 and, hitting cap 5, is in part reflected B" in such a way to follow, after having undergone refraction B at the interface between mycrosphere 1 and external environment, a direction substantially parallel or coincident with the incident flow A. A part of the incident flow A, A' is instead transmitted (flow B'), after another refraction, beyond cap 5 toward bonding resin 2. This means that the cap 5 of reflecting substance 4 is semitransparent and then permits, in presence of day light, to perceive eventual colours and/or decorations of support 3 to which material 10 can be applied.

As shown in figure 2, spherical caps 5a-5d contact, and are partially or totally incorporated in, the bonding resin 2, in such a way that they generate a plurality of substantially hemispherical concave mirrors positioned to have the same (partial) reflection optical properties along the whole extension of the layer of mycrospheres 1a-1d.

In other words, orientation of mycrospheres 1a-1d is such that respective caps 5a-5d, on which a thin layer of a reflecting substance 4 has been deposed, are in contact with resin 2 and then turn their concavity toward the outside of the same stratiform material 10, when this is applied (as in figure 2) on a support 3. Reflecting substance 4 normally applied on mycrospheres 1a-1d may be a metallic, micaceous material or any other suitable material.

In case of metallic material, a layer of aluminium may be utilized, having thickness included between 10Å and 180Å. When layer of aluminium has thickness included within the range 20Å - 31Å, or anyway when such layer has optical density values included between 0,2 and 1,0, an amount from around 63% to around 10% of incident light is able to pass through cap 5 and so to reach transparent and colourless resin 2 and then support 3.

Application of material 10 on a support 3, for example textile and/or plastic, provided with a pattern 6, for example a decoration or a coloured surface, permits the observer to easily perceive such decoration 6 during the day, while during the night, in presence of external light sources, the observer perceives only the retro-reflection properties of material 10, or else only a white light beam reflected toward an incident light beam source is visible.

Support 3 on which material 10 is applied may be of a textile type, as any cloth, or of a plastic type, as for example a road sign element, and material 10 may cover only partially, or totally, support 3 in correspondence of eventual decorations or coloured regions.

In not shown embodiments of stratiform material 10, according to the present invention, this may comprise further superficial layers, as for example a protective upper transparent layer arranged in correspondence of the enlightened surface of mycrospheres 1a-1d.

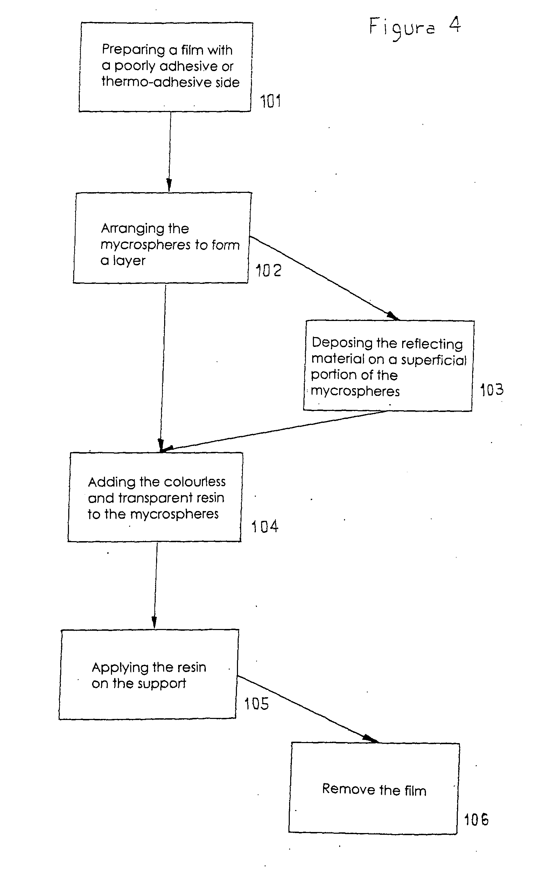

With reference now to figure 4, it is shown a particular method of realization of a support provided with at least a portion on which it is applied or spread some retro-reflecting material 10.

In a general embodiment of the method according to the present invention, there are provided the steps of:
- arranging a plurality of completely or partially transparent spheroidal elements (mycrospheres) 1a-1d to form a single layer, that is having spheroidal elements 1a-1d directly contacting each other, but without overlapping (step 102);
- adding a colourless and transparent bonding resin 2 on the layer of spheroidal elements (step 104);
- applying (or spreading) the bonding resin 2 on a support 3 (step 105).

In a preferred embodiment of the afore mentioned method, it also provided a step 103 of deposition of a reflecting substance, as for example aluminium, on superficial portions of mycrospheres 1a-1d, to form partially reflecting caps 5a-5d. Such step 103 may be conveniently provided between the step 102 of generation of the layer of spheroidal elements 1a-1d and the successive step 104 of addition of bonding resin 2.

Moreover, step 105 of application or spreading of bonding resin 2 on support 3 may eventually precede the step 102 of arranging mycrospheres 1a-1d on the same resin 2 to form a single layer.

According to another aspect of the method according to the present invention, before step 104 of addition of resin 2 on the layer of mycrospheres 1a-1d, in the same bonding resin 2 one or more reflecting substances are included, as for example of a micaceous type, amount of which is sufficient to confer only partial reflecting properties to resin 2, while keeping the substantial transparency and the absence of colouration. Utilization of such solution may make the step 103 of the controlled deposition of a reflecting substance on superficial portions of mycrospheres 1a-1d useless.

In another embodiment of the method according to the present invention, schematically illustrated in figure 4, mycrospheres 1a-1d are arranged (steps 101 and 102) on the poorly adhesive or thermo-adhesive side of an auxiliary film (not shown in the figures), in such a way to provide, on the side opposite to the film, only the surface which is intended to undergo to a successive step 103 of deposition of a reflecting substance 4. Adhesive or thermo-adhesive agent provided on a side of such auxiliary film must have adhesiveness lower than the one of the bonding resin 2, so that removal of the film does not cause any damages to the layer of mycrospheres 1a-1b.

After deposition of a layer of a reflecting substance 4 (step 103) on mycrospheres 1a-1d, after application of colourless and transparent resin 2 to such mycrospheres 1a-1d, and eventually after step 105 of fixing such resin 2, the auxiliary film can be removed from the side not covered by mycrospheres 1a-1d, on a suitable support 3.

As it is evident from the afore description, the stratiform retro-reflecting material 10, according to the present invention, when applied on a support 3 provided with a pattern 6, decoration or coloured regions, permits to observe translucent image or colours of the same pattern 6 in diffused light conditions, while keeping substantially unchanged the capacity of reflecting white light when such material 10 is hit by light beams from an external source, in darkness and/or low visibility conditions.

## Claims

1. A stratiform material, having retro-reflecting properties, transferable on a support, of the type comprising at least a layer of partially or completely transparent spheroidal elements and at least a layer of bonding resin integral with said layer of spheroidal elements, **characterized in that** said layer of bonding resin is substantially colourless and substantially transparent.

2. A stratiform material according to claim 1, wherein said spheroidal elements have absolute refractive index greater than or equal to 1,1.

3. A stratiform material according to claim 1 or claim 2, **characterized in that** said spheroidal elements comprise at least a spherical cap covered with a layer constituted by a substantially reflecting material, the covered spherical caps being arranged so to contact said layer of bonding resin.

4. A stratiform material according to claim 3, **characterized in that** said layer of substantially reflecting material has optical density included within 0,1 to 1,3.

5. A stratiform material according to claim 3 or claim 4, wherein said substantially reflecting material is a metallic material.

6. A stratiform material according to claim 5, **characterized in that** said metallic material is aluminium and said layer has thickness included within about 10 Å to about 180 Å.

7. A stratiform material according to claim 3 or claim 4, wherein said substantially reflecting material is of micaceous type.

8. A stratiform material according to any claim from 3 to 7, wherein said spherical cap is substantially hemispherical.

9. A stratiform material according to any preceding claim, wherein said spheroidal elements are made of glass.

10. A stratiform material according to any preceding claim, wherein said substantially colourless and substantially transparent resin is chosen between resins of the acrylic type, polyuretanic, polyester, acrylic-vinyl and EVA.

11. A stratiform material according to any preceding claim, **characterized in that** said bonding resin comprises one or more reflecting substances to confer partial reflection properties to said bonding resin.

12. A stratiform material according to claim 11, wherein one of said one or more reflecting substances is a substance of micaceous type.

13. A stratiform material according to any preceding claim, wherein said support is a textile or plastic support.

14. A textile and/or plastic support comprising one or more portions of a stratiform material having retro-reflecting properties according to any previous claim, said one or more portions of stratiform material being applied on said support through said layer formed by bonding resin.

15. A support according to claim 14, **characterized in that** it comprises a decoration in correspondence of the application zone of said one or more portions of stratiform material.

16. A support according to claim 14 or claim 15, wherein said support is a cloth.

17. Method for the realization of a textile and/or plastic support having at least locally retro-reflecting properties, provided with one or more layers of partially or completely transparent spheroidal elements, comprising the steps of:
arranging a plurality of partially or completely transparent spheroidal elements to form a single layer of said one or more layers of spheroidal elements;
adding a substantially colourless and substantially transparent bonding resin on said layer of spheroidal elements;
fixing said resin to the textile and/or plastic support.

18. Method according to claim 17, comprising the step of deposing a layer of reflecting substance on a spherical cap of said plurality of spheroidal elements, said step immediately following the step of arranging said plurality of spheroidal elements to form a single layer, said step of adding a bonding resin being carried out in such a way that the bonding resin at least partially contacts said spherical caps with a layer of reflecting substance.

19. Method according to claim 18, wherein said layer of reflecting substance provides optical density values included within 0,1 to 1,3.

20. Method according to claim 18 or claim 19, wherein said reflecting substance is a material of metallic type.

21. Method according to any claim from 17 to 20, **characterized in that** it comprises the step of including one or more reflecting substances in said bonding resin to confer only partially reflecting properties to said resin.

22. Method according to any claim from 17 to 21, wherein said resin is chosen between resins of the type: acrylic, polyuretanic, polyester, acrylic-vinyl, EVA.

23. Method according to any claim from 17 to 22, wherein said spheroidal elements have average diameter included between 5 to 2000 µm and have absolute refractive index greater than or equal to 1,1.

24. Method according to any claim from 17 to 23, wherein said step of arranging a plurality of spheroidal elements to form a single layer is carried out on a poorly adhesive or thermo-adhesive side of a film.
